# EUROPÄISCHE PATENTSCHRIFT

(11) **EP 3 898 173 B1**
(45) Veröffentlichungstag und Bekanntmachung des Hinweises auf die Patenterteilung: **31.05.2023**
(21) Anmeldenummer: 19832649.8
(22) Anmeldetag: 18.12.2019
(51) Int. Cl.: B29C 49/20, B29C 51/12, B60K 15/03

(54) **KRAFTSTOFFBEHÄLTER FÜR EIN KRAFTFAHRZEUG UND VERFAHREN ZUR HERSTELLUNG EINES SOLCHEN KRAFTSTOFFBEHÄLTERS UND AUSSTEIFUNGSELEMENT FÜR EINEN KRAFTSTOFFBEHÄLTER**
FUEL CONTAINER FOR A MOTOR VEHICLE AND METHOD FOR PRODUCING SUCH A FUEL CONTAINER, AND REINFORCING ELEMENT FOR A FUEL CONTAINER
RÉSERVOIR DE CARBURANT POUR UN VÉHICULE À MOTEUR ET PROCÉDÉ POUR FABRIQUER UN TEL RÉSERVOIR DE CARBURANT ET ÉLÉMENT DE RENFORCEMENT POUR UN RÉSERVOIR DE CARBURANT

(30) Priorität: 21.12.2018 DE 102018133531
(43) Veröffentlichungstag der Anmeldung: 27.10.2021
(73) Patentinhaber: Kautex Textron GmbH & Co. KG, 53229 Bonn (DE)
(72) Erfinder: LEY, Ingo, 51109 Köln (DE); QUANT, Frank, 53117 Bonn (DE); ANKERT, Detlef, 53177 Bonn (DE)
(74) Vertreter: Richly & Ritschel Patentanwälte PartG mbB
(86) Internationale Anmeldenummer: PCT/EP2019/086061
(87) Internationale Veröffentlichungsnummer: WO 2020/127560

(56) Entgegenhaltungen:
- EP-A1- 3 366 459
- EP-A2- 1 080 971
- CN-A- 103 753 799
- CN-B- 103 753 799
- DE-A1- 4 221 766
- DE-B4- 4 221 766
- US-B2- 7 290 675

## Beschreibung

Die vorliegende Erfindung betrifft einen Kraftstoffbehälter für ein Kraftfahrzeug, mit einer Kunststoffwandung, die ein Vorratsvolumen zum Bevorraten eines Kraftstoffs begrenzt, mit einem oder mehreren Aussteifungselementen zum Aussteifen der Kunststoffwandung, wobei mindestens ein Aussteifungselement mit einer dem Vorratsvolumen abgewandten Außenseite mit der Kunststoffwandung verbunden ist. Weiter betrifft die Erfindung ein Verfahren zum Herstellen eines solchen Kraftstoffbehälters sowie ein Aussteifungselement für einen Kraftstoffbehälter.

Kraftstoffbehälter von Kraftfahrzeugen dienen dazu, Kraftstoff für eine Brennkraftmaschine zuverlässig und sicher zu bevorraten. Moderne Kraftstoffbehälter sind aus gewichtsgründen üblicherweise aus Kunststoff hergestellt. Insbesondere in Hybridfahrzeugen, bei denen der Kraftstofftank während rein elektrischer Fahrt versiegelt wird, um Emissionen auszuschlie-ßen, können aufgrund von Druckschwankungen innerhalb des Tanks hohe Verformungen der Tankwandungen auftreten, wobei es zu Verformungen von bis zu 25 mm der betreffenden Wandung aus ihrer Nominallage kommen kann. Fahrzeughersteller fordern jedoch Verformungen von 10 mm oder weniger, um den zur Einbindung des Kraftstofftanks in das Gesamtfahrzeug erforderlichen Bauraum gering zu halten.

Es ist bekannt, Tankversteifungselemente innerhalb des Vorratsvolumens als zwischen zwei Halbschalen der Tankwandung erstreckte Streben vorzusehen. Diese Lösung hat jedoch den Nachteil, dass die innenliegenden Versteifungselemente eine erhebliche Reduzierung des zur Bevorratung von Kraftstoff vorgesehenen Vorratsvolumens mit sich bringen. Weiter hat sich gezeigt, dass diese Art der Aussteifung der Wandung für die Anwendung in Hybridfahrzeugen mit zeitweise versiegeltem Kraftstoffbehälter den Anforderungen an die maximal zulässigen Verformungen von 10 mm oder weniger nicht gerecht wird. US 7 290 675 B2 offenbart einen Kraftstoffbehälter gemäß dem Oberbegriff des Anspruchs 1.

Vor diesem Hintergrund liegt der Erfindung die technische Problemstellung zugrunde, einen Kraftstoffbehälter der eingangs genannten Art und ein Verfahren zum Herstellen eines Kraftstoffbehälters anzugeben, welche die zuvor genannten Nachteile nicht oder zumindest in geringerem Maße aufweisen und insbesondere eine zuverlässige Aussteifung bei geringerem Volumenverlust ermöglichen.

Gemäß einem ersten Aspekt betrifft die Erfindung Kraftstoffbehälter für ein Kraftfahrzeug nach Anspruch 1, mit einer Kunststoffwandung, die ein Vorratsvolumen zum Bevorraten eines Kraftstoffs begrenzt, mit einem oder mehreren Aussteifungselementen zum Aussteifen der Kunststoffwandung, wobei mindestens ein Aussteifungselement mit einer dem Vorratsvolumen abgewandten Außenseite der Kunststoffwandung verbunden ist. Eine normal zur Kunststoffwandung gemessene, maximale Dicke mindestens eines Aussteifungselements ist größer als die Wanddicke der Kunststoffwandung.

Die außenseitige Aussteifung mit einer lokalen Verdickung der Wandungsstruktur durch das Aussteifungselement ermöglicht gegenüber vorbekannten Lösungen eine zuverlässige Aussteifung der Kunststoffwandung bei geringerem Volumenverlust.

Beispielsweise entspricht die maximale Dicke mindestens eines Aussteifungselements mindestens dem Zweifachen, dem Dreifachen, dem Vierfachen, dem Zehnfachen oder dem Zwanzigfachen der Wanddicke der Kunststoffwandung. Insbesondere hat das Aussteifungselement eine maximale Dicke, ausgewählt aus einem Bereich zwischen einschließlich 10 mm bis einschließlich 100 mm. Nach einer weiteren Ausgestaltung des Kraftstoffbehälters ist vorgesehen, dass die Kunststoffwandung eine erste Halbschale und eine zweite Halbschale aufweist, die im Bereich der Seitenwandung umfangsseitig umlaufend miteinander verschweißt sind, wobei die erste Halbschale eine Oberschale ist, die die Behälterdecke umfasst und die zweite Halbschale eine Unterschale ist, die den Behälterboden umfasst.

Damit kann eine gezielte Aussteifung in einem Übergang der Seitenwandung zu einem Behälterboden und/oder zur Behälterdecke erfolgen, so dass, im Fall von Druckänderungen, sowohl eine Verformung der Seitenwandung als auch eine Verformung des Behälterbodens und/oder der Behälterdecke reduziert werden können.

Nach einer weiteren Ausgestaltung des Kraftstoffbehälters weist mindestens ein Aussteifungselement eine im Wesentlichen dreieckige oder sichelförmige Grundform auf. Das Aussteifungselement kann daher insbesondere nach Art eines Verstärkungswinkels geformt sein, um beispielsweise eine gezielte Aussteifung in einem Übergang der Seitenwandung zu einem Behälterboden und/oder zur Behälterdecke zu bilden.

Gemäß einer weiteren Ausgestaltung des Kraftstoffbehälters hat das Aussteifungselement mindestens einen verjüngten Endabschnitt, der insbesondere über eine Endabschnittlänge von 20 mm oder weniger eine Dicke von 5 mm oder weniger aufweist und insbesondere keilförmig verjüngt ist. Eine voranstehend beschriebene Verjüngung ermöglicht eine verbesserte Anbindung des Aussteifungselements an die Kunststoffwandung, da unter Last die Kerbwirkung bzw. Lastspitzen im Verbindungsbereich zur Kunststoffwandung reduziert werden können.

Ein verjüngter Endabschnitt kann eine abgerundete Form aufweisen. Alternativ oder ergänzend kann der Endabschnitt eine Abplattung aufweisen, die im Vergleich zum an den Endabschnitt angrenzenden Mittenabschnitt verbreitert ausgeführt ist. Alternativ oder ergänzend kann der verjüngte Endabschnitt gabelförmig verzweigt ausgeführt sein. Alternativ oder ergänzend kann der verjüngte Endabschnitt eine Durchgangsöffnung aufweisen.

Eine weitere Ausgestaltung des Kraftstoffbehälters zeichnet sich dadurch aus, dass ein stirnseitiger Verbindungsbereich mindestens eines Aussteifungselements zumindest abschnittsweise oder vollständig bogenförmig ausgeführt ist, wobei das Aussteifungselement in dem Verbindungsbereich insbesondere stoffschlüssig mit der Kunststoffwandung verbunden ist. Das Aussteifungselement kann daher an einer Wandungsform des Kraftstoffbehälters angepasst sein.

Insbesondere kann ein Übergang der Seitenwandung zu einem Behälterboden und/oder ein Übergang der Seitenwandung zur Behälterdecke im Querschnitt betrachtet bogenförmig ausgeführt sein. So kann ein weicher, kerbwirkungsreduzierter Übergang geschaffen werden. Insbesondere kann ein stirnseitiger Verbindungsbereich eines Aussteifungselements insbesondere spaltfrei an einem bogenförmigen Übergang der Kunststoffwandung anliegen oder spaltfrei und stoffschlüssig mit einem solchen bogenförmigen Übergang der Kunststoffwandung verbunden sein.

Gemäß einer weiteren Ausgestaltung des Kraftstoffbehälters ist vorgesehen, dass mindestens ein Aussteifungselement ein Spritzgussbauteil mit einer Verrippung ist. Auf diese Weise kann ein steifes Aussteifungselement mit geringerem Gewicht kostengünstig bereitgestellt werden.

Alternativ oder ergänzend hat mindestens ein Aussteifungselement eine Mehrzahl von Schweißpins, die insbesondere an einer Stirnseite und/oder einer an die Stirnseite angrenzenden Seitenfläche des Aussteifungselements angeordnet sind. Die Schweißpins verbessern eine stoffschlüssige Verbindung zur Kunststoffwandung und können teilweise oder vollständig mit einem Werkstoff der Kunststoffwandung verschmolzen sein. Vor dem Herstellen einer stoffschlüssigen Verbindung zur Kunststoffwandung können die Schweißpins integraler Bestandteil eines insbesondere einstückig als Spritzgussbauteil bereitgestellten Aussteifungselements sein.

Eine weitere Ausgestaltung des Kraftstoffbehälters ist dadurch gekennzeichnet, dass mindestens ein Aussteifungselement dreiseitig mit der Kunststoffwandung verbunden ist, wobei insbesondere eine Stirnseite und zwei an die Stirnseite angrenzende, einander abgewandte Seitenflanken stoffschlüssig mit der Kunststoffwandung verbunden sind. Das Aussteifungselement kann daher dreiseitig von der Kunststoffwandung eingefasst bzw. umschlossen sein, so dass eine zuverlässige Verbindung zwischen dem Aussteifungselement und der Kunststoffwandung gebildet ist.

Insbesondere kann im Bereich jeder der drei Seiten eine stoffschlüssige Verbindung zwischen dem Aussteifungselement und der Kunststoffwandung gebildet sein, so dass eine stoffschlüssige Verbindung zwischen der Stirnseite und dem Aussteifungselement und jeweils eine stoffschlüssige Verbindung zwischen den Seitenflanken und der Kunststoffwandung gebildet ist. Insbesondere können die stoffschlüssigen Verbindungen der Seitenflanken zu der Kunststoffwandung nahtlos in die stoffschlüssige Verbindung der Stirnseite zu der Kunststoffwandung übergehen.

Eine weitere Ausgestaltung des Kraftstoffbehälters zeichnet sich dadurch aus, dass zwischen mindestens einem Aussteifungselement und der Kunststoffwandung mindestens eine formschlüssige Verbindung gebildet ist, insbesondere im Bereich einer Hinterschneidung, einer Nut oder dergleichen. Insbesondere kann vorgesehen sein, dass im Bereich einer Stirnseite eines Aussteifungselements eine stoffschlüssige Verbindung zu der Kunststoffwandung gebildet ist und im Bereich von zwei an die Stirnseite angrenzenden einander abgewandte Seitenflanken des Aussteifungselements jeweils eine stoffschlüssige und eine formschlüssige Verbindung zu der Kunststoffwandung ausgebildet ist. So kann das Aussteifungselement zuverlässig in die Kunststoffwandung eingebunden werden, um diese strukturell zu verstärken.

Nach einer weiteren Ausgestaltung des Kraftstoffbehälters ist vorgesehen, dass mindestens ein Aussteifungselement ein HDPE aufweist oder aus einem HDPE besteht. Die Abkürzung HDPE steht in bekannter Weise für "High-Density Polyethylene", insbesondere mit einer Dichte in einem Bereich von 0,94 g/cm³ bis 0,97 g/cm³. So kann ein kostengünstiges Aussteifungselement angegeben werde, dass insbesondere leicht verschweißbar ist.

Insbesondere ist zwischen einem Aussteifungselement und der Kunststoffwandung eine artgleiche stoffschlüssige Verbindung gebildet, wobei beispielsweise das Aussteifungselement aus HDPE besteht und mit einem HDPE der Kunststoffwandung verschweißt ist.

Alternativ kann das Aussteifungselement ein LDPE aufweisen oder aus einem LDPE bestehen. Die Abkürzung LDPE steht in bekannter Weise für "Low-Density Polyethylene", insbesondere mit einer Dichte in einem Bereich von 0,915 g/cm³ bis 0,935 g/cm³.

Alternativ kann das Aussteifungselement einen faserverstärkten Kunststoff aufweisen oder aus einem faserverstärkten Kunststoff bestehen. Hierzu können Kurzfasern, Langfasern oder Endlosfasern als Verstärkungsfasern verwendet werden. Beispielsweise können Glasfasern, Aramidfasern oder Kunststofffasern eingesetzt werden.

Alternativ kann das Aussteifungselement einen Mischwerkstoff, einen sogenannte Blend aufweisen, oder aus einem Mischwerkstoff bestehen. Dabei kann es sich z.B. um eine Werkstoffmischung aus PE (Polyethylen) mit PA (Polyamid) oder PE (Polyethylen) mit POM (Polyoxymethylen) handeln.

Die Kunststoffwandung kann einlagig, zweilagig oder mehrlagig gebildet sein. Beispielsweise kann die Kunststoffwandung eine EVOH-Barriereschicht als Diffusionsbarriere für Kohlenwasserstoffe haben, die zweiseitig von HDPE-Lagen eingefasst ist, so dass sich ein dreilagiger Wandungsaufbau ergibt. Alternativ kann zwischen der EVOH-Barriereschicht und den zweiseitig angeordneten HDPE-Schichten jeweils eine LDPE-Schicht als Haftvermittlerschicht angeordnet sein, so dass sich ein fünfschichtiger Wandungsaufbau ergibt. Die Abkürzung "LDPE" steht für "Low-Density Polyethylene". Die Abkürzung "EVOH" steht für "Ethylen-Vinylalkohol-Copolymer".

Gemäß einer weiteren Ausgestaltung des Kraftstoffbehälters ist mindestens ein Aussteifungselement in eine Vertiefung oder Einsenkung der Kunststoffwandung eingelassen. So kann eine kompakte Integration des Aussteifungselements in den Bauraum des Kraftstoffbehälters erfolgen.

Alternativ oder ergänzend kann vorgesehen sein, dass eine zwischen einer Behälterdecke und einem Behälterboden des Kraftstoffbehälters gemessene Höhe des Kraftstoffbehälters 30 cm oder mehr beträgt. Die vorgesehene Aussteifung ermöglicht daher das Erfüllung von Herstellervorgaben an die maximale Auslenkung von Wandungsbereichen aus ihrer Nominallage auch für Kraftstoffbehälter, deren Höhe 30 cm oder mehr beträgt.

Es kann vorgesehen sein, dass eine Mehrzahl von Aussteifungselementen an der Kunststoffwandung vorgesehen ist. Soweit die Kunststoffwandung beispielsweise zwei Halbschalen aufweist, insbesondere eine Oberschale und eine Unterschale, können eine Mehrzahl von Aussteifungselementen an der Oberschale vorgesehen sein und alternativ oder ergänzend eine Mehrzahl von Aussteifungselementen an der Unterschale vorgesehen sein. Jedes der Aussteifungselemente kann in voranstehend beschriebener Weise ausgestaltet sein.

Alternativ oder ergänzend zu einer Verschweißung kann das Aussteifungselement formschlüssig mit der Kunststoffwandung verbunden sein. Dabei können auskragende Formelemente des Aussteifungselements mit Hinterschneidungen während der Formgebung der Kunststoffwandung in der formgebenden Wärme von der Kunststoffwandung umschlossen werden und/oder diese durchdringen, so dass im abgekühlten Zustand eine nicht zerstörungsfrei lösbare, formschlüssige Verbindung zwischen der Kunststoffwandung und den Formelementen gebildet ist. Alternativ oder ergänzend können Öffnungen an dem Aussteifungselement gebildet sein, in die das Material der Kunststoffwandung während der Formgebung der Kunststoffwandung durchdringt und hintergreift, so dass im abgekühlten Zustand eine nicht zerstörungsfrei lösbare, formschlüssige Verbindung zwischen der Kunststoffwandung und den Öffnungen gebildet ist.

Auf diese Weise können auch Materialkombinationen der Aussteifungselmente und der Kunststoffwandung zuverlässig miteinander verbunden werden, die nicht oder nur schlecht schweißbar sind. Beispielsweise kann die Kunststoffwandung HDPE aufweisen, während das Aussteifungselement POM, PA, ein Duromer oder PE aufweist, die nicht oder schlecht mit dem HDPE der Kunststoffwandung verschweißbar sind. Beispielsweise kann das Aussteifungselement z.B. sprödharte Materialien aufweisen, die im Crashfall zerbrechen, bevor die Kunststoffwandung beschädigt wird.

Das Aussteifungselement kann in einer Zwei-Komponentenbauweise hergestellt sein und wenigstens zwei unterschiedliche Werkstoffe aufweisen, die stoffschlüssig und/oder formschlüssig und/oder kraftschlüssig miteinander verbunden sind. Dabei kann es sich um eine Kombination zweiter Kunststoffe oder eines Kunststoffs mit einem Metall handeln, um die Steifigkeit des Aussteifungselements an die zu erwartenden statischen und dynamischen Betriebslasten anzupassen.

Ein Aussteifungselement kann durch eine rechnergestützte Simulation hinsichtlich seines Gewichts und/oder der Steifigkeit optimiert worden sein.

Ein Aussteifungselement kann eine oder mehrere Aussteifungsrippen haben.

Ein Aussteifungselement kann eine oder mehrere Aussteifungsrippen haben, die unterbrochen sind, und/oder Teilbereiche haben, die keine Rippen aufweisen.

Gemäß einem zweiten Aspekt betrifft die Erfindung ein Verfahren zum Herstellen eines Kraftstoffbehälters nach Anspruch 11, und zwar eines erfindungsgemäßen Kraftstoffbehälters, mit den Verfahrensschritten:
- Herstellen einer Kunststoffwandung, die ein Vorratsvolumen zum Bevorraten eines Kraftstoffs begrenzt, durch Einbringen eines plastifizierten Kunststoffs ein Formwerkzeug;
- Verbinden eines oder mehrerer Aussteifungselemente zum Aussteifen der Kunststoffwandung mit der Kunststoffwandung, wobei die Aussteifungselemente vor dem Einbringen des plastifizierten Kunststoffs in das Formwerkzeug an dem Formwerkzeug angeordnet sind, derart, dass mindestens ein Aussteifungselement mit einer dem Vorratsvolumen abgewandten Außenseite der Kunststoffwandung verbunden ist wobei
- eine normal zur Wandung gemessene, maximale Dicke mindestens eines Aussteifungselements einem Vielfachen der Wanddicke der Kunststoffwandung entspricht.

So kann ein Kraftstoffbehälter hergestellt werden, dessen außenseitige Aussteifung mit einer lokalen Verdickung der Wandungsstruktur durch das Aussteifungselement gegenüber vorbekannten Lösungen eine zuverlässige Aussteifung der Kunststoffwandung bei geringerem Volumenverlust ermöglicht.

Nach einer weiteren Ausgestaltung des Verfahrens ist vorgesehen, dass das Formwerkzeug eine Blasform ist und mindestens ein Aussteifungselement durch Überblasen desselben innerhalb der Blasform stoffschlüssig und/oder formschlüssig mit der Kunststoffwandung verbunden wird. Beispielsweise können Vorformlinge zur Fertigung zweier Halbschalen der Kunststoffwandung als co-extrudiertes, längsseitig zerteiltes Schlauchmaterial bereitgestellt werden, die innerhalb einer Blasform durch Innerdruckbeaufschlagung geformt werden. Ein stoffschlüssiges Verbinden, insbesondere Verschweißen, des Aussteifungselements oder mehrerer Aussteifungselemente mit der Kunststoffwandung kann insbesondere in der formgebenden Wärme der Vorformlinge erfolgen. Alternativ kann vorgesehen sein, dass ein Vorformling ein co-extrudierter Schlauch ist, der durch Innendruckbeaufschlagung außenseitig mit einem oder mehreren Aussteifungselementen verbunden wird.

Es kann vorgesehen sein, dass mindestens ein Aussteifungselement auf an einer Stirnseite und/oder an die Stirnseite angrenzenden Seitenflanke eine Mehrzahl von Schweißpins oder Schweißstege hat, um beim Einbringen des plastifizierten Kunststoffs in das Formwerkzeug eine stoffschlüssige Verbindung zur Kunststoffwandung auszubilden, wobei die Schweißstege insbesondere rasterartig verteilt oder die Schweißpins punktförmig in Zeilen und Spalten an einem Verbindungsbereich vorgesehen sind.

Alternativ oder ergänzend kann vorgesehen sein, dass mindestens ein Aussteifungselement eine Nut, eine Hinterschneidung oder einen Vorsprung hat, um beim Einbringen des plastifizierten Kunststoffs in das Formwerkzeug eine formschlüssige Verbindung zur Kunststoffwandung auszubilden.

Es kann vorgesehen sein, dass mindestens ein Aussteifungselement dreiseitig mit der Kunststoffwandung verbunden wird, wobei insbesondere eine Stirnseite und zwei an die Stirnseite angrenzende, einander abgewandte Seitenflanken stoffschlüssig mit der Kunststoffwandung verbunden werden, wobei das Aussteifungselement vor dem Einbringen des plastifizierten Kunststoffs auf einem Dorn oder Steg des Formwerkzeugs sitzt, der in das Aussteifungselement ragt und von den Seitenflanken zweiseitig eingefasst und zumindest abschnittsweise gegenüber einem Formhohlraum des Formwerkzeugs abgegrenzt ist. So kann eine kompakte Integration des Aussteifungselements in die Kunststoffwandung erreicht werden.

Eine weitere Ausgestaltung des Verfahrens zeichnet sich dadurch aus, dass mindestens ein Aussteifungselement dreiseitig mit der Kunststoffwandung verbunden wird, wobei insbesondere eine Stirnseite und zwei an die Stirnseite angrenzende, einander abgewandte Seitenflanken stoffschlüssig mit der Kunststoffwandung verbunden werden, wobei das Aussteifungselement vor dem Einbringen des plastifizierten Kunststoffs zwischen zwei Formeinsätzen aufgenommen ist und wobei die Formeinsätze das Aussteifungselement zumindest abschnittsweise gegenüber einem Formhohlraum des Formwerkzeugs abgrenzen.

Gemäß einer zweckmäßigen Ausführungsform wird vorgeschlagen, dass das Aussteifungselement beim Einbringen in das Formwerkzeug mit einem Verrastungselement an dem Formwerkzeug fixiert wird.

Unter eine Verrastungselement wird ein Element verstanden, welches dazu eingerichtet ist, eine formschlüssige und/oder kraftschlüssige Verbindung zwischen dem Formwerkzeug und dem Aussteifungselement eingehen zu können.

Vorteilhaft kann so erreicht werden, dass das Aussteifungselement nach dem Einbringen in das Formwerkzeug mittels eines Verrastungselement gehalten und/oder fixiert werden kann. Durch die derart bereitgestellte Verbindung kann das Aussteifungselement vorzugsweise nach dem verrasten mit dem Formwerkzeug mittels dem Verrastungselement nicht innerhalb des Formwerkzeugs verrutschen, sodass die Form- und Lagetoleranzen des hergestellten Kraftstoffbehälters insgesamt vorteilhaft verbessert werden können.

Vorzugsweise ist ein Verrastungselement als ein Druckstück ausgebildet, insbesondere als ein federndes Druckstück.

Ein federndes Druckstück ist ein Maschinenbauteil, welches eine innenliegende Feder aufweist, welche auf einen Druckkörper, insbesondere eine Kugel und/oder einen Druckstift, wirkt.

Auf diese Weise kann ein Aussteifungselement vorteilhaft auf einfache Art und Weise sicher innerhalb des Formwerkzeugs befestigt werden, wobei es zum Ausformen des ausgeformten Kraftstoffbehälters auch gleichzeitig wieder leicht lösbar ist.

Alternativ kann unter einem Verastungselement auch eine Verklipsung verstanden werden. Insbesondere sei dabei an eine Verklipsung gedacht, welche insbesondere an dem Aussteifungselement ausgeformt und dazu eingerichtet ist, in das Formwerkzeug einzugreifen und eine formschlüssige und/oder kraftschlüssige Verbindung zwischen dem Formwerkzeug und dem Aussteifungselement herzustellen.

Vorteilhaft kann hierdurch erreicht werden, dass die Aufnahme eines Aussteifungselements an dem Formwerkzeug vereinfacht werden kann und zugleich auch weniger wartungsanfällig ausgeführt werden kann.

Alternativ kann die Verklipsung auch in dem Formwerkzeug ausgeformt sein.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Es sei ausdrücklich darauf hingewiesen, dass das hier vorgeschlagenen Verrastungselement auch für andere Anwendungsfälle innerhalb eines Formwerkzeugs zum Einsatz kommen kann.

Gemäß einem dritten Aspekt betrifft die Erfindung ein Aussteifungselement für einen Kraftstoffbehälter, insbesondere für einen Kraftstoffbehälter nach dem ersten Aspekt der Erfindung, wobei das Aussteifungselement zumindest ein Sackloch aufweist, welches zum Greifen mit einem Greifer eingerichtet ist.

Insbesondere ist auch denkbar, dass das Aussteifungselement zumindest zwei Sacklöcher aufweist, welche zum Greifen mit einem Greifer eingerichtet sind.

Vorzugsweise sind die Sacklöcher in so ausgeformt, dass sie auf der Seite des Aussteifungselements angeordnet sind, welche designiert mit der Kunststoffwandung des Kraftstoffbehälters in Kontakt kommen.

Mit anderen Worten sind die Sacklöcher vorzugsweise so ausgerichtet, dass sie bei dem in dem Formwerkzeug eingebrachten und/oder verrasteten Aussteifungselement zum inneren der Kavität des Formwerkzeugs orientiert sind.

Somit kann ein Greifer ein Aussteifungselement anhand der Sacklöcher greifen und das Aussteifungselement in das Formwerkzeug einführen.

Vorzugsweise weist ein Sackloch einen Hinterschnitt auf, welcher einen Formschluss zwischen dem Greifer und dem Aussteifungselement vorteilhaft ermöglicht.

Es sei ausdrücklich darauf hingewiesen, dass der Gegenstand des dritten Aspekts mit dem Gegenstand der vorstehenden Aspekte der Erfindung vorteilhaft kombinierbar ist, und zwar sowohl einzeln oder in beliebiger Kombination kumulativ. Nachfolgend wird die Erfindung anhand einer Ausführungsbeispiele darstellenden Zeichnung näher beschrieben. Es zeigen jeweils schematisch:
- Fig. 1: einen erfindungsgemäßen Kraftstoffbehälter;
- Fig. 2: ein Aussteifungselement an einer Kunststoffwandung;
- Fig. 3A: ein Aussteifungselement;
- Fig. 3B: das Aussteifungselement aus Fig. 3A in Rückansicht;
- Fig. 4: ein weiteres Aussteifungselement;
- Fig. 5: ein weiteres Aussteifungselement;
- Fig. 6: ein Blasformwerkzeug mit eingesetzten Aussteifungselementen;
- Fig. 7: ein Aussteifungselement an einer Kunststoffwandung;
- Fig. 8: Varianten von Endabschnitten eines Aussteifungselements;
- Fig. 9: ein weiteres Aussteifungselement;
- Fig. 10a: ein weiteres Aussteifungselement;
- Fig. 10b: das Aussteifungselement aus Fig. 10a schematisch in einem ersten Schnitt;
- Fig. 10c: das Aussteifungselement aus Fig. 10a schematisch in einem zweiten Schnitt;
- Fig. 11a: erste Verbindungsvariante von Aussteifungselementen zur Kunststoffwandung;
- Fig. 11b: zweite Verbindungsvariante von Aussteifungselementen zur Kunststoffwandung;
- Fig. 11c: dritte Verbindungsvariante von Aussteifungselementen zur Kunststoffwandung;
- Fig. 12: Querschnittsformen von Aussteifungselementen;
- Fig. 13: ein weiteres Aussteifungselement im Schnitt;
- Fig. 14: ein weiteres Aussteifungselement;
- Fig. 15: ein weiteres Aussteifungselement;
- Fig. 16a: eine Detailansicht eines Formwerkzeugs mit Verrastungselement; und
- Fig. 16b: ein in einem Formwerkzeug fixiertes Aussteifungselement.

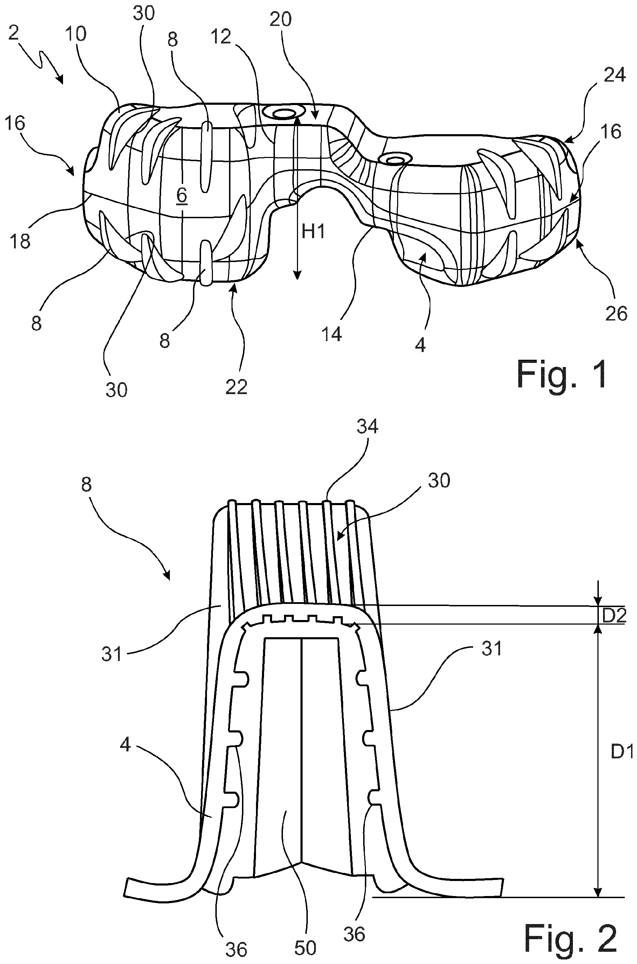

Fig. 1 zeigt einen Kraftstoffbehälter 2 für ein Kraftfahrzeug. Der Kraftstoffbehälter 2 hat eine Kunststoffwandung 4, die ein Vorratsvolumen 6 zum Bevorraten eines Kraftstoffs begrenzt.

Der Kunststoffbehälter 2 eine Mehrzahl von Aussteifungselementen 8 zum Aussteifen der Kunststoffwandung 4. Die Aussteifungselemente 8, von denen lediglich drei exemplarisch mit einem Bezugszeichen versehen sind, sind mit einer dem Vorratsvolumen 6 abgewandten Außenseite 10 der Kunststoffwandung 4 verbunden. Eine normal zur Kunststoffwandung 4 gemessene, maximale Dicke D1 von ca. 45 mm der jeweiligen Aussteifungselemente 8 ist größer als die Wanddicke D2 der Kunststoffwandung 4.

Die Kunststoffwandung 4 weist eine erste Halbschale 12 und eine zweite Halbschale 14 auf. Die Halbschalen 12, 14 sind im Bereich einer Seitenwandung 16 der Kunststoffwandung 4 umfangsseitig umlaufend entlang einer Schweißnaht 18 verschweißt.

Die erste Halbschale 12 ist eine Oberschale, die eine Behälterdecke 20 umfasst. Die zweite Halbschale 14 ist eine Unterschale, die einen Behälterboden 22 umfasst. Eine Mehrzahl der Aussteifungselemente 8 ist jeweils in einem bogenförmigen Übergang 24 von der Seitenwandung 16 zur Behälterdecke 20 angeordnet bzw. in einem bogenförmigen Übergang 26 von der Seitenwandung 16 zum Behälterboden 22 angeordnet.

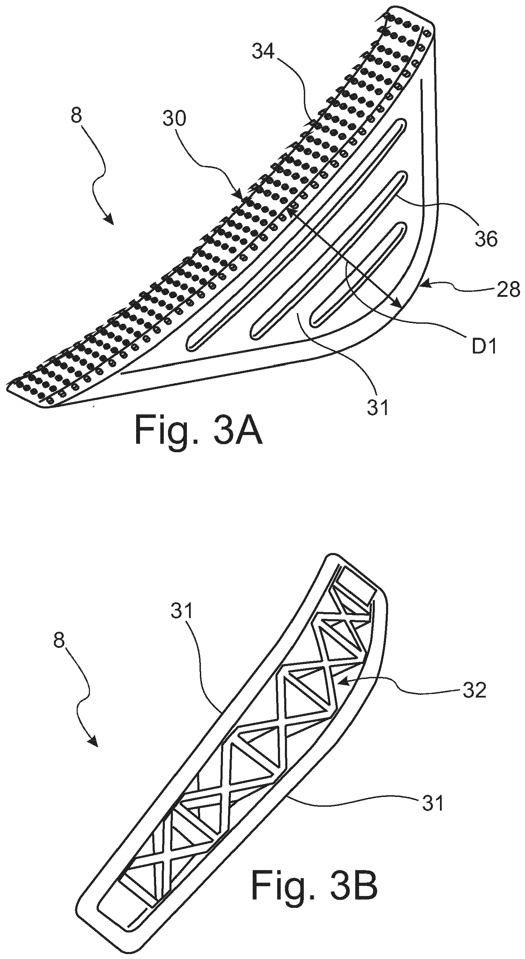

Die Figuren 3A und 3B zeigen das Aussteifungselement 8 aus den Figuren 1 und 2 vereinzelt jeweils in einer perspektivischen Darstellung von vorne (Fig. 3A) und einer perspektivischen Rückansicht (Fig. 3B).

Das Aussteifungselement 8 ist ausgehend von einem Bereich 28 maximaler Dicke D1 zweiseitig verjüngt und weist eine im Wesentlichen sichelförmige bzw. mondförmige Grundform auf. Ein stirnseitiger Verbindungsbereich 30, mit dem das Aussteifungselement 8 stirnseitig mit der Kunststoffwandung verschweißt wird, ist bogenförmig ausgeführt.

Das Aussteifungselement 8 ist vorliegend als Spritzgussbauteil ausgeführt und weist eine Verrippung 32 auf. An der Stirnseite 30 des Aussteifungselements 8 sind eine Mehrzahl von Schweißpins 34 in Zeilen und Spalten aufgereiht angeordnet, die zum Herstellen einer stoffschlüssigen Verbindung zu der Kunststoffwandung 4 dienen.

Alternativ oder ergänzend zu den punktförmigen Schweißpins kann gemäß weiterer Ausgestaltungen eine raster- oder gitterartige Stegstruktur zum Herstellen der stoffschlüssigen Verbindung vorgehalten werden.

Wie in Fig. 2 dargestellt, sind die Aussteifungselemente jeweils dreiseitig mit der Kunststoffwandung 4 verbunden, wobei einerseits die Stirnseite 30 und zudem zwei an die Stirnseite 30 angrenzende, einander abgewandte Seitenflanken 31 stoffschlüssig mit der Kunststoffwandung 4 verbunden sind.

Weiter sind an dem Aussteifungselement 8 Nuten 36 vorgesehen, um eine formschlüssige Verbindung herzustellen. Die Nuten 36 sind in die Seitenflanken 31 des Aussteifungselements 8 eingeformt und, ebenso wie die Schweißpins 34, im Spritzgussverfahren einstückig an dem Aussteifungselement 8 gebildet worden. Die Aussteifungselemente 8 bestehen vorliegend aus HDPE.

Wie Fig. 2 zu entnehmen ist, sind die Aussteifungselemente 8 in die Kunststoffwandung 4 eingelassen, sodass die Aussteifungselemente 8 jeweils in einer Vertiefung bzw. Einsenkung der Kunststoffwandung 4 sitzen.

Eine zwischen der Behälterdecke 20 und dem Behälterboden 22 gemessene Höhe H1 Kraftstoffbehälters 2 beträgt vorliegend mehr als 30 cm.

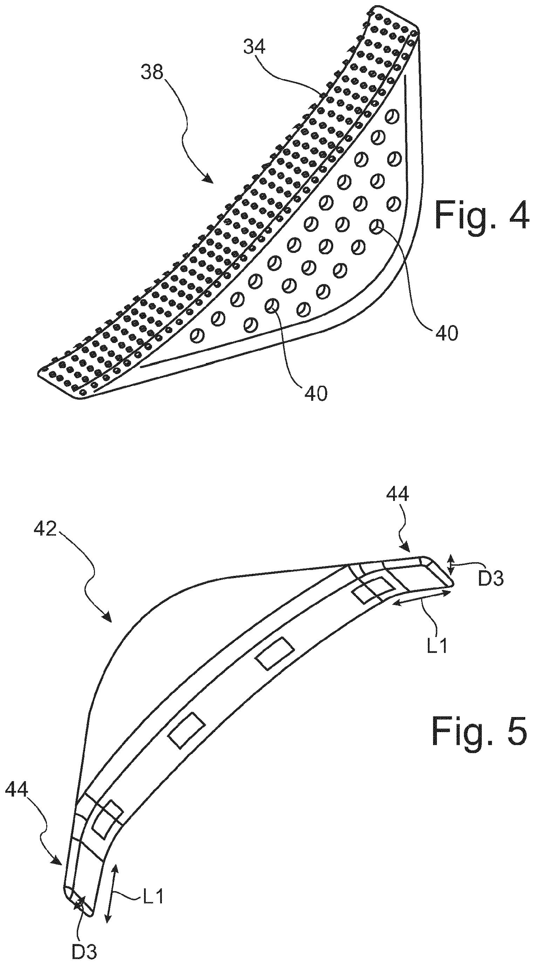

Fig. 4 zeigt eine Variante eines Aussteifungselements 38 für einen erfindungsgemäßen Kraftstoffbehälter 2, das alternativ oder ergänzend zu den Aussteifungselementen 8 an der Kunststoffwandung 4 vorgesehen sein kann.

Das Aussteifungselement 38 unterscheidet sich dadurch von dem zuvor beschriebenen Aussteifungselement 8, das im Bereich der Seitenflanken Einsenkungen 40 vorgesehen sind, sodass sich im an der Wandung 4 befestigten Zustand noppenartige formschlüssige Verbindungen zu der Kunststoffwandung 4 des Kraftstoffbehälters 2 ergeben.

Diese noppenartigen formschlüssigen Verbindungen ergeben den Vorteil, dass sie besonders zur Aufnahme einer Kraft zwischen dem Kraftstoffbehälter und dem Aussteifungselement geeignet sind, wodurch eine zusätzliche Versteifung des Kraftstoffbehälters bewirkt werden kann.

Vorzugsweise kann eine Einsenkung 40 als Durchgangsloch ausgeführt sein, sodass sich im an der Wandung 4 befestigten Zustand eine formschlüssige Verbindung zu der Kunststoffwandung 4 des Kraftstoffbehälters 2 ergibt.

Besonders vorzugsweise kann eine Einsenkung 40 mit zumindest zwei unterschiedlichen Durchmessern ausgeformt sein. Insbesondere sei dabei konkret an eine vorteilhafte Ausführungsform gedacht, bei welcher der größere Durchmesser der Einsenkung 40 auf der designiert von der Wandung 4 abgewandten Seite angeordnet ist, sodass sich im an der Wandung 4 befestigten Zustand eine formschlüssige Verbindung zu der Kunststoffwandung 4 des Kraftstoffbehälters 2 ergibt, welche vorzugsweise durch die unterschiedlichen Durchmesser der Einsenkung 40 einen Hinterschnitt aufweist. Ein derartiger Hinterschnitt ist in axialer Richtung der Einsenkung 40 besonders belastbar.

Ein weiterer Vorteil einer als Durchgangsloch ausgeführten Einsenkung 40 ergibt sich daraus, dass es als Entlüftung während dem Blasformprozess genutzt werden kann, sodass der plastifizierte Kunststoff ohne Gegendruck optimal in die als Durchgangsloch ausgeführte Einsenkung 40 eindringen kann.

Alternativ können im Bereich der Seitenflanken gleichermaßen Schweißpins bzw. Noppen oder Stegstrukturen vorgesehen sein, um eine formschlüssige Verbindung und stoffschlüssige Verbindung zu der Kunststoffwandung zu begünstigen.

Fig. 5 zeigt eine weitere Ausgestaltung eines Aussteifungselements 42, das alternativ oder ergänzend zu den Aussteifungselementen 8 und/oder 38 an dem erfindungsgemäßen Flüssigkeitsbehälter 2 vorgesehen sein kann, um die Kunststoffwandung 4 auszusteifen.

Das Aussteifungselement 42 zeichnet sich durch verjüngte Endabschnitte 44 aus, die über eine Endabschnittlänge L1 eine Dicke D3 von 5 mm oder weniger aufweisen. Die Endabschnittlänge L1 beträgt ca. 20 mm.

Die Aussteifungselemente 38 und 42 bestehen vorliegend ebenfalls aus HDPE.

Zum Herstellen eines erfindungsgemäßen Kraftstoffbehälters werden eine Mehrzahl von Aussteifungselementen 8, 38 und/oder 42 in einem Formwerkzeug 46 angeordnet (Fig. 5).

Vorliegend handelt es sich bei dem Formwerkzeug 46 um eine Blasform, sodass die gezeigten Aussteifungselemente 8 und 38 beim Druckbeaufschlagen und Ausformen der Kunststoffwandung 4 innerhalb der Blasform 46 mit der Kunststoffwandung verschweißt werden. Das Verschweißen erfolgt vorliegend aus der formgebenden Wärme eines Vorformlings, der vor dem Druckbeaufschlagen und Einbringen in die Blasform 46 extrudiert worden ist.

Das Aussteifungselement 8 sitzt vorliegend auf einem Steg 48, der in eine rückseitige Aufnahme 50 des Aussteifungselements 8 (vergleiche Fig. 2) ragt, sodass das Aussteifungselement 8 entsprechend der Darstellung der Fig. 2 dreiseitig von der ausgeformten Kunststoffwandung 4 umschlossen werden kann. Demnach ist der Steg 48 zweiseitig von den Seitenflanken 31 des Aussteifungselements 8 eingefasst und gegenüber einem Formhohlraum 52 des Formwerkzeugs 46 abgegrenzt.

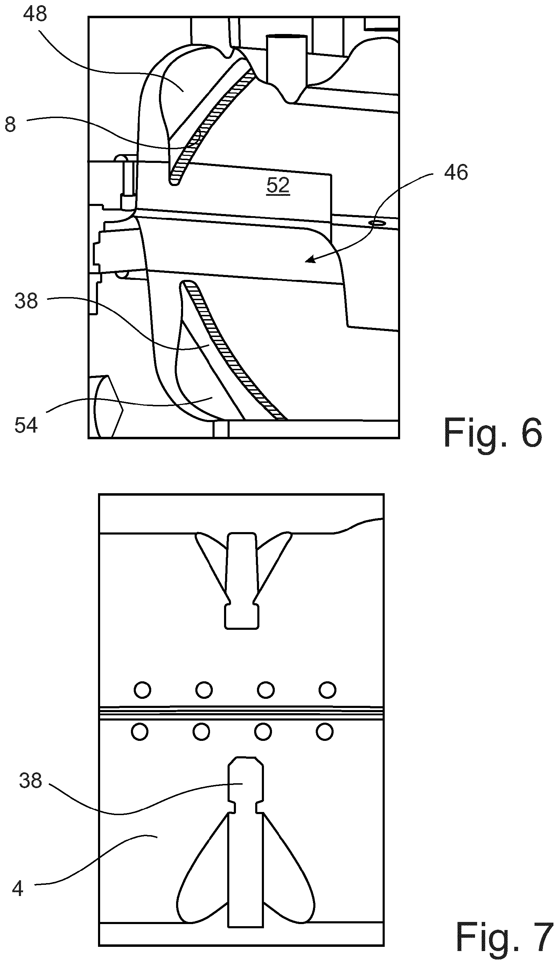

Demgegenüber ist das Aussteifungselement 38 (Fig. 6) zwischen zwei Formeinsätzen 54 gehalten, von denen lediglich ein Formeinsatz 54 in der gezeigten Darstellung zu erkennen ist. Die Formeinsätze 54 fassen das Aussteifungselement 38 abschnittsweise zweiseitig gegenüber dem Formhohlraum 52 ein, sodass die in Fig. 7 exemplarisch gezeigte Einbindung des Aussteifungselements 38 in die Kunststoffwandung 4 entsteht.

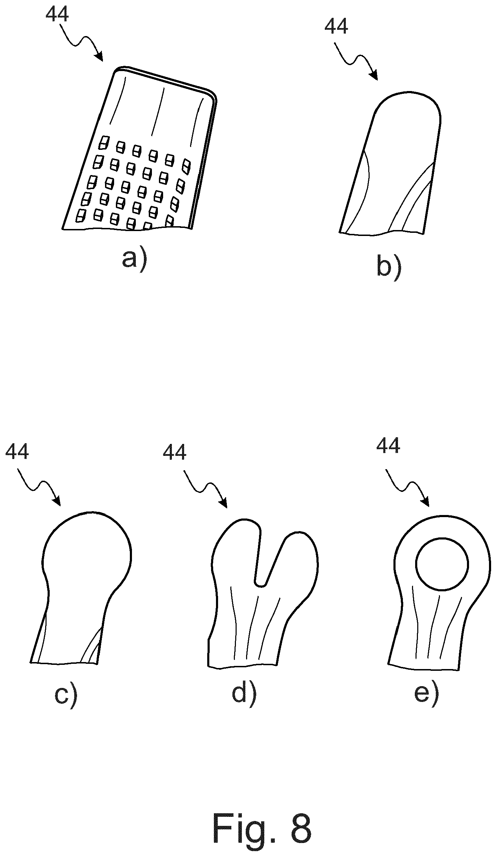

Mit Bezug zu Figur 8 werden nachfolgend verschiedene Varianten für die Formgebung der Endabschnitte 44 gezeigt. Variante a) zeigt einen Endabschnitt 44 entsprechend Figur 5, der gegenüber einem angrenzenden zentralen Mittelabschnitt des betreffenden Aussteifungselements 42 lediglich verjüngt worden ist.

Figur 8 zeigt in der Variante b) eine Ausgestaltung eines Endabschnitts 44, der eine Abrundung aufweist, um die Lasten im Verbindungsbereich zur Kunststoffwarnung zu reduzieren.

Figur 8 zeigt gemäß Variante c) eine endseitige Abrundung, die zusätzlich verbreitert worden ist.

Figur 8 zeigt in der Variante d) eine gegenüber dem angrenzenden Mittenabschnitt des Aussteifungselements verbreiterte Ausführung des Endabschnitts 44, der zudem gabelförmig ist.

Figur 8 zeigt in einer Variante e) einen Endabschnitt 44, der eine Durchgangsöffnung bzw. Lochung aufweist.

Alle vorgenannten Ausgestaltungen bzw. Varianten von Endabschnitten 44 dienen dazu, Spannungsspitzen im Verbindungsbereich der Endabschnitte zur Wandung zu reduzieren.

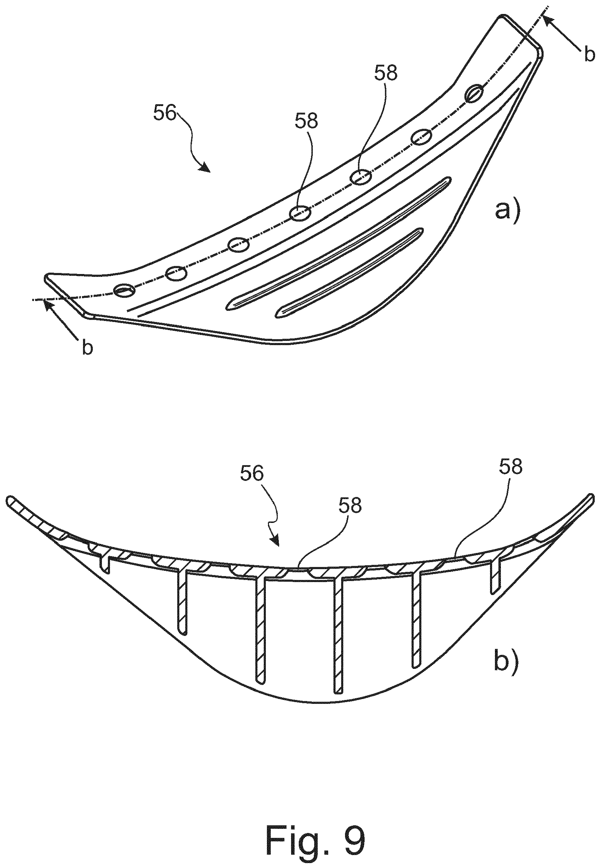

Figur 9 zeigt eine weitere Variante eines erfindungsgemäßen Aussteifungselements 56 in einer perspektivischen Ansicht von oben (Fig. 9a) sowie einem Längsschnitt (Fig. 9b).

Das Aussteifungselement 56 unterscheidet sich dadurch von den voranstehend gezeigten Varianten, dass eine Mehrzahl von Durchgangsöffnung 58 an dem Aussteifungselement 56 gebildet sind, die beim Verbinden des Aussteifungselement 56 mit einer Kunststoffwandung in der formgebenden Wärme der Kunststoffwandung von dem Material der Kunststoffwandung durchdrungen werden, sodass sich nietähnliche Verbindungen zwischen der betreffenden Kunststoffwandung und dem Aussteifungselement 56 ergeben, die dadurch gebildet sind, dass sich das abgekühlte Material in einen Innenraum des Aussteifungselements 56 hinein erstreckt und die Durchgangsöffnung 58 seitlich hintergreift, sodass formschlüssige, nicht zerstörungsfrei lösbare Verbindungen gebildet werden.

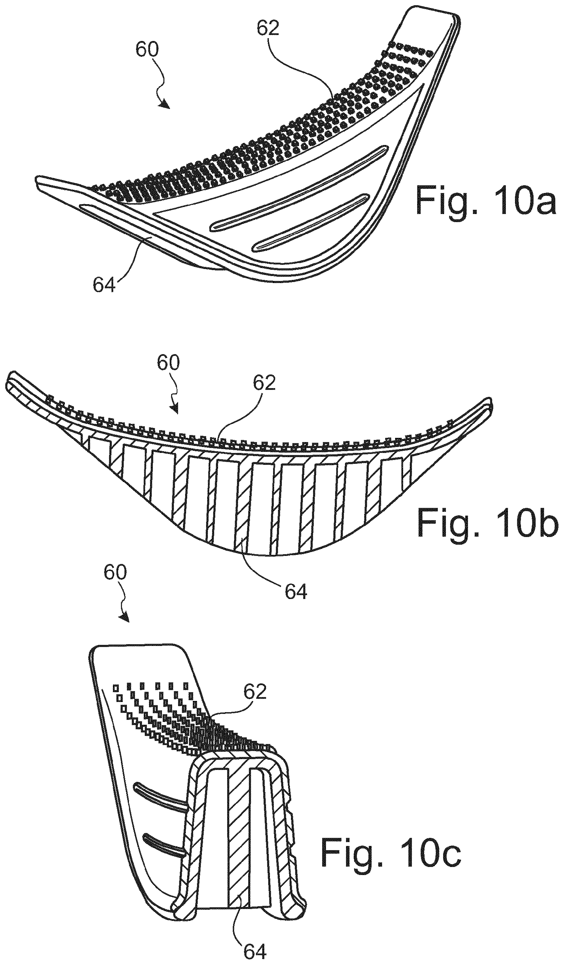

Die Figuren 10a, 10b und 10c zeigen eine weitere Variante eines erfindungsgemäßen Aussteifungselement 60, dass sich dadurch von den voranstehend gezeigten Varianten unterscheidet, dass es in einer Zwei-Komponentenbauweise gebildet ist. So weist das Aussteifungselement 60 eine erste Kunststoffkomponente 62 und eine zweite Kunststoffkomponente 64 auf, die, wie den Schnittdarstellungen gemäß Figur 10b) und 10c) zu entnehmen, stoffschlüssig und formschlüssig miteinander verbunden sind.

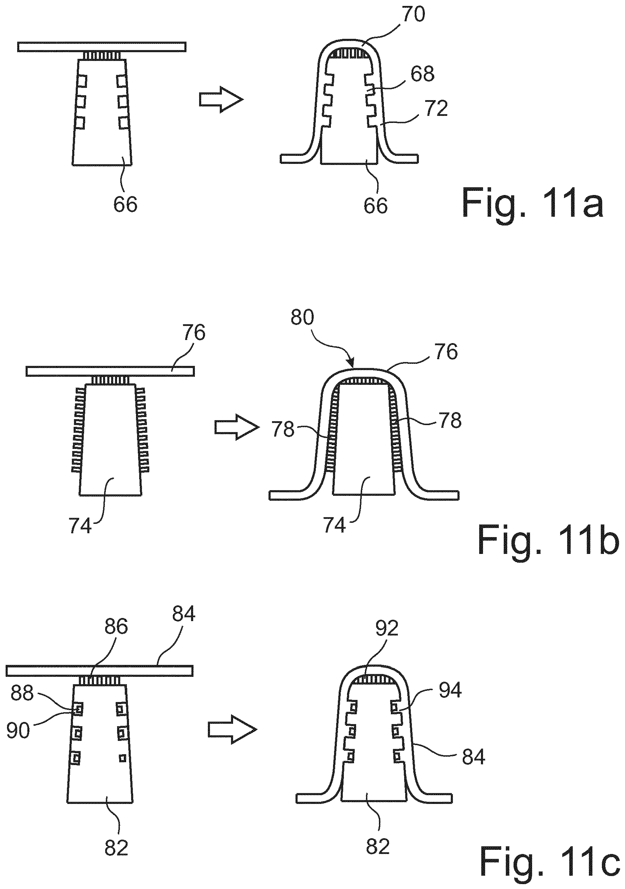

Mit Bezug zu den Figuren 11a, 11b und 11c werden Verbindungsarten zwischen einem Aussteifungselement und einer zugeordneten Kunststoffwandung gezeigt, wobei die Schnittdarstellung jeweils analog zur Variante gemäß Figur 2 gewählt worden ist.

Figur 11a) zeigt, ähnlich wie Figur zwei, ein Aussteifungselement 66, das formschlüssige Verbindungen 68 und stoffschlüssige Verbindung 70 zu einer zugeordneten Kunststoffwandung 72 aufweist.

Figur 11b) zeigt ein Aussteifungselement 74 mit einer Kunststoffwandung 76, wobei seitlich stoffschlüssige Verbindungen 78 und eine stirnseitige stoffschlüssige Verbindung 80 zwischen dem Aussteifungselement 74 und der zugeordneten Kunststoffwandung 76 gebildet sind.

Figur 11c) zeigt eine Variante einer Verbindung zwischen einem Aussteifungselement 82 und einer zugeordneten Kunststoffwandung 84, wobei das Aussteifungselement 82 Schweißpins 86 aufweist, die stirnseitig angeordnet sind und zudem Schweißpins 88 aufweist, die in Ausnehmungen 90 angeordnet sind.

So können stirnseitig eine stoffschlüssige Verbindung 90 und seitlich eine stoffschlüssige und eine formschlüssige Verbindung 94 gebildet werden.

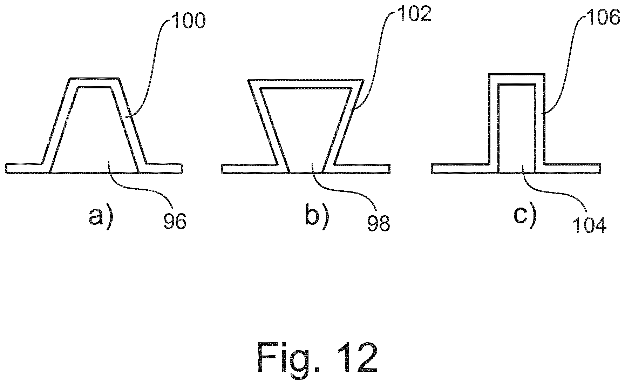

Figur 12 zeigt drei Varianten möglicher Querschnittsformen von Aussteifungselementen, wobei die Varianten a) und b) jeweils trapezförmige Querschnitte eines Aussteifungselements 96 bzw. 98 zeigen, dass von einer jeweils zugeordneten Wandung 100, 102 umschlossen wird. Ein Aussteifungselement 104 ist gemäß Figur 12c) im Querschnitt betrachtet im Wesentlichen rechteckig gebildet und von der zugeordneten Wandung 106 dreiseitig umschlossen.

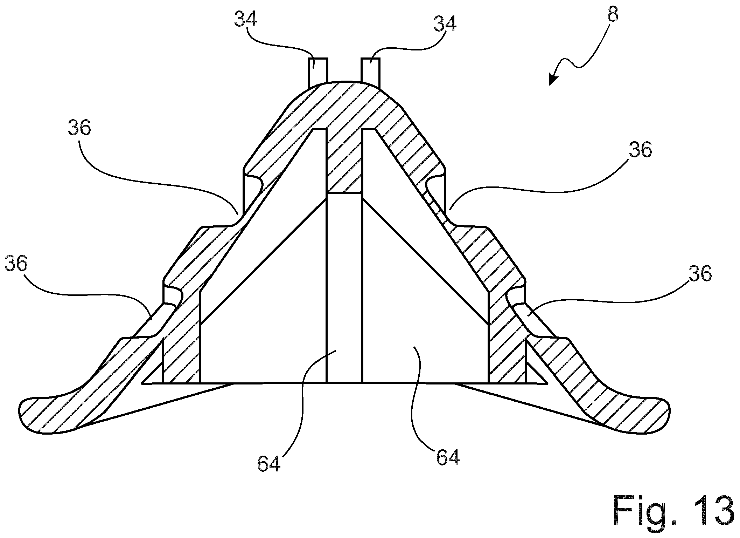

Figur 13 zeigt eine Variante eines Aussteifungselements 8 in einem Mittelschnitt, wobei das Aussteifungselement 8 in Querrichtung eine im wesentlichen dreieckige Form aufweist.

An der Wandung des Aussteifungselements 8 sind an beiden Seiten eine Mehrzahl von Nuten 36 angeordnet, welche eine formschlüssige Verbindung zwischen dem Aussteifungselement 8 und dem designiert mit dem Aussteifungselement 8 verbundenen Kraftstoffbehälter (nicht abgebildet) ermöglichen.

Auf der von der designiert mit dem Kraftstoffbehälter verbundenen Wand abgewandten Seite sind Kunststoffkomponenten 64 zur Versteifung des Aussteifungselement 8 vorgesehen.

Auf der Oberseite des Aussteifungselements 8 ist eine Mehrzahl von Schweißpins 34 angeordnet, die ebenfalls zur Verbindung mit dem Kraftstoffbehälter (nicht abgebildet) eingerichtet sind.

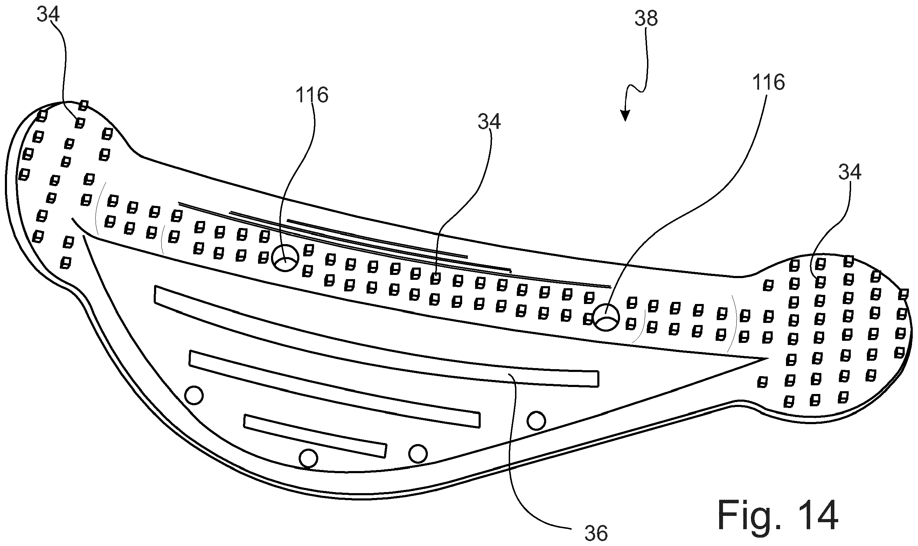

Figur 14 zeigt ein Aussteifungselement 38, welches ebenfalls einen im Wesentlichen dreieckigen Querschnitt in Längsrichtung aufweist.

Neben den Nuten 36 und den Schweißpins 34 weist das Aussteifungselement auch zwei Sacklöcher 116 auf, welche zum Greifen mittels einem Greifer eingerichtet sind.

Das Aussteifungselement 38 kann mittels der Sacklöcher 116 sicher von einem Greifer (nicht abgebildet) gegriffen, positioniert und wieder losgelassen werden.

Insbesondere kann das Aussteifungselement 38 mittels der Sacklöcher 116 reproduzierbar von einem Greifer (nicht abgebildet) innerhalb eines Formwerkzeugs (nicht abgebildet) positioniert und gegebenenfalls auch fixiert werden.

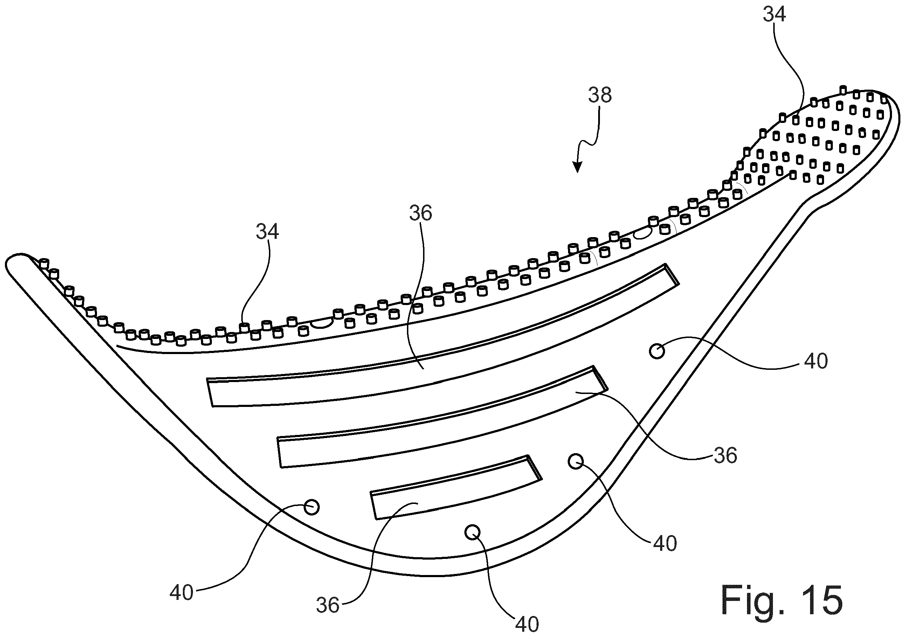

Figur 15 zeigt ein weiteres Aussteifungselement 38, welches neben den Nuten 36 und den Schweißpins 34 eine Mehrzahl von Einsenkungen 40 aufweist, wobei die Einsenkungen 40 als Durchgangslöcher ausgestaltet sind.

Die Einsenkungen 40 ermöglichen eine formschlüssige Verbindung zu dem designierten Kraftstoffbehälter (nicht abgebildet) und eignen sich weiterhin als Entlüftung, sodass der plastifizierte Kunststoff ohne Gegendruck optimal in die als Durchgangsloch ausgeführten Einsenkungen 40 eindringen kann.

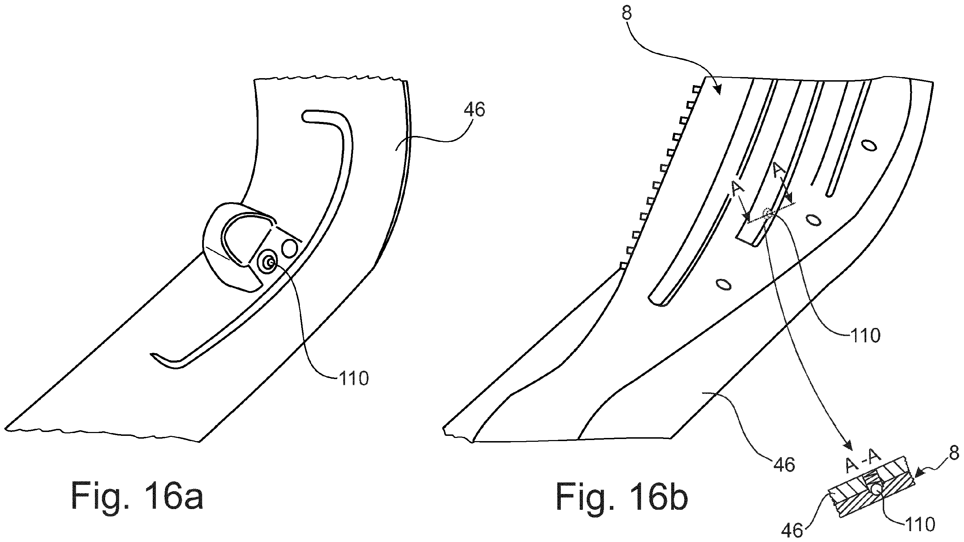

Figur 16a zeigt eine Detailansicht eines Formwerkzeugs 46 mit einem Verrastungselement 110 in Form einer innenliegenden Feder (nicht abgebildet) mit einem als Kugel (nicht separat bezeichnet) ausgebildeten Druckkörper (nicht separat bezeichnet).

Das Verrastungselement 110 ermöglicht die einfache und positionsgenaue Fixierung eines Aussteifungselements 8 innerhalb des Formwerkzeugs 46.

Figur 16b zeigt ein Formwerkzeug 46 aufweisend ein Verrastungselement 110 sowie ein mit dem Verrastungselement 110 an dem Formwerkzeug 46 fixiertes Aussteifungselement 8.

### Bezugszeichen

- 2: Kraftstoffbehälter
- 4: Kunststoffwandung
- 6: Vorratsvolumen
- 8: Aussteifungselement
- 10: Außenseite
- 12: Halbschale
- 14: Halbschale
- 16: Seitenwandung
- 18: Schweißnaht
- 20: Behälterdecke
- 22: Behälterboden
- 24: Übergang
- 26: Übergang
- 28: Bereich
- 30: Verbindungsbereich
- 32: Verrippung
- 34: Schweißpin
- 31: Seitenflanke
- 36: Nut
- 38: Aussteifungselement
- 40: Einsenkung
- 42: Aussteifungselement
- 44: Endabschnitt
- 46: Formwerkzeug
- 48: Steg
- 50: Aufnahme
- 52: Formhohlraum
- 54: Formeinsatz
- 56: Aussteifungselement
- 58: Durchgangsöffnung
- 60: Aussteifungselement
- 62: Kunststoffkomponente
- 64: Kunststoffkomponente
- 66: Aussteifungselement
- 68: formschlüssige Verbindungen 68 und
- 70: stoffschlüssige Verbindung
- 72: Kunststoffwandung
- 74: Aussteifungselement
- 76: Kunststoffwandung
- 78: stoffschlüssige Verbindungen
- 80: stoffschlüssige Verbindung
- 82: Aussteifungselement
- 84: Kunststoffwandung
- 86: Schweißpins
- 88: Schweißpins
- 90: Ausnehmungen
- 92: stoffschlüssige Verbindung
- 94: formschlüssige Verbindung
- 96: Aussteifungselement
- 98: Aussteifungselement
- 100: Wandung
- 102: Wandung
- 104: Aussteifungselement
- 106: Wandung dreiseitig
- 110: Verrastungselement
- 116: Sackloch
- H1: Höhe
- D1: Dicke
- D2: Wanddicke
- D3: Dicke

## Patentansprüche

1. Kraftstoffbehälter (2) für ein Kraftfahrzeug,
- mit einer Kunststoffwandung (4, 84), die ein Vorratsvolumen (6) zum Bevorraten eines Kraftstoffs begrenzt,
- mit einem oder mehreren Aussteifungselementen (8, 38, 42, 56, 60, 66, 74, 82, 96, 98) zum Aussteifen der Kunststoffwandung (4, 84),
- wobei mindestens ein Aussteifungselement (8, 38, 42, 56, 60, 66, 74, 82, 96, 98) mit einer dem Vorratsvolumen (6) abgewandten Außenseite (10) der Kunststoffwandung (4, 84) verbunden ist,
- wobei eine normal zur Kunststoffwandung (4, 84) gemessene, maximale Dicke (D1) des mindestens einen Aussteifungselements (8, 38, 42, 56, 60, 66, 74, 82, 96, 98) größer ist als die Wanddicke (D2) der Kunststoffwandung (4, 84),
**dadurch gekennzeichnet, dass** das mindestens eine Aussteifungselement (8, 38, 42, 56, 60, 66, 74, 82, 96, 98) ausgehend von einem Bereich der maximalen Dicke zweiseitig verjüngt ist und das
- mindestens eine Aussteifungselement (8, 38, 42, 56, 60, 66, 74, 82, 96, 98) in einem Übergang (24) von einer Seitenwandung (16) zu einer Behälterdecke (20) angeordnet ist und/oder das mindestens eine Aussteifungselement (8, 38, 42, 56, 60, 66, 74, 82, 96, 98) in einem Übergang (26) von einer Seitenwandung (16) zu einem Behälterboden (22) angeordnet ist.

2. Kraftstoffbehälter (2) nach Anspruch 1,
**dadurch gekennzeichnet, dass**
- die Kunststoffwandung (4, 84) eine erste Halbschale (12, 14) und eine zweite Halbschale (12, 14) aufweist, die im Bereich der Seitenwandung (16) umfangsseitig umlaufend miteinander verschweißt sind,
- wobei die erste Halbschale (12, 14) eine Oberschale ist, die die Behälterdecke (20) umfasst und
- die zweite Halbschale (12, 14) eine Unterschale ist, die den Behälterboden (22) umfasst.

3. Kraftstoffbehälter (2) nach einem der Ansprüche 1 oder 2, **dadurch gekennzeichnet, dass**
- mindestens ein Aussteifungselement (8, 38, 42, 56, 60, 66, 74, 82, 96, 98) eine im Wesentlichen dreieckige oder sichelförmige Grundform aufweist.

4. Kraftstoffbehälter (2) nach einem der Ansprüche 1 bis 3,
**dadurch gekennzeichnet, dass**
- das Aussteifungselement (8, 38, 42, 56, 60, 66, 74, 82, 96, 98) mindestens einen verjüngten Endabschnitt (44) hat, der insbesondere über eine Endabschnittlänge von 20 mm oder weniger eine Dicke von 5 mm oder weniger aufweist und insbesondere keilförmig verjüngt ist.

5. Kraftstoffbehälter (2) nach einem der Ansprüche 1 bis 4,
**dadurch gekennzeichnet, dass**
- ein stirnseitiger Verbindungsbereich (30) mindestens eines Aussteifungselements (8, 38, 42, 56, 60, 66, 74, 82, 96, 98) zumindest abschnittsweise oder vollständig bogenförmig ausgeführt ist, wobei das Aussteifungselement (8, 38, 42, 56, 60, 66, 74, 82, 96, 98) in dem Verbindungsbereich (30) insbesondere stoffschlüssig mit der Kunststoffwandung (4, 84) verbunden ist.

6. Kraftstoffbehälter (2) nach einem der Ansprüche 1 bis 5,
**dadurch gekennzeichnet, dass**
- mindestens ein Aussteifungselement (8, 38, 42, 56, 60, 66, 74, 82, 96, 98) ein Spritzgussbauteil mit einer Verrippung (32) ist
und/oder
- mindestens ein Aussteifungselement (8, 38, 42, 56, 60, 66, 74, 82, 96, 98) eine Mehrzahl von Schweißpins (34, 86, 88) hat, die insbesondere an einer Stirnseite und/oder einer an die Stirnseite angrenzenden Seitenfläche des Aussteifungselements (8, 38, 42, 56, 60, 66, 74, 82, 96, 98) angeordnet sind.

7. Kraftstoffbehälter (2) nach einem der Ansprüche 1 bis 6, **dadurch gekennzeichnet, dass**
- mindestens ein Aussteifungselement (8, 38, 42, 56, 60, 66, 74, 82, 96, 98) dreiseitig mit der Kunststoffwandung (4, 84) verbunden ist,
- wobei insbesondere eine Stirnseite und zwei an die Stirnseite angrenzende, einander abgewandte Seitenflanken (31) stoffschlüssig mit der Kunststoffwandung (4, 84) verbunden sind.

8. Kraftstoffbehälter (2) nach einem der Ansprüche 1 bis 7, **dadurch gekennzeichnet, dass**
- zwischen mindestens einem Aussteifungselement (8, 38, 42, 56, 60, 66, 74, 82, 96, 98) und der Kunststoffwandung (4, 84) mindestens eine formschlüssige Verbindung (68, 94) gebildet ist, insbesondere durch eine Hinterschneidung, eine Nut (36) oder dergleichen.

9. Kraftstoffbehälter (2) nach einem der Ansprüche 1 bis 8, **dadurch gekennzeichnet, dass**
- mindestens ein Aussteifungselement (8, 38, 42, 56, 60, 66, 74, 82, 96, 98) ein HDPE aufweist oder aus einem HDPE besteht.

10. Kraftstoffbehälter (2) nach einem der Ansprüche 1 bis 9, **dadurch gekennzeichnet, dass**
- mindestens ein Aussteifungselement (8, 38, 42, 56, 60, 66, 74, 82, 96, 98) in eine Vertiefung oder Einsenkung (40) der Kunststoffwandung (4, 84) eingelassen ist und/oder
- eine zwischen einer Behälterdecke (20) und einem Behälterboden (22) des Kraftstoffbehälters (2) gemessene Höhe des Kraftstoffbehälters (2) 30 cm oder mehr beträgt und/oder
- eine Mehrzahl von Aussteifungselementen (8, 38, 42, 56, 60, 66, 74, 82, 96, 98) an der Kunststoffwandung (4, 84) vorgesehen sind.

11. Verfahren zum Herstellen eines Kraftstoffbehälters (2) nach einem der Ansprüche 1 bis 10, mit den Verfahrensschritten:
- Herstellen der Kunststoffwandung (4, 84), die ein Vorratsvolumen (6) zum Bevorraten eines Kraftstoffs begrenzt, durch Einbringen eines plastifizierten Kunststoffs in ein Formwerkzeug (46);
- Verbinden des einen oder der mehreren Aussteifungselemente zum Aussteifen der Kunststoffwandung (4, 84) mit der Kunststoffwandung (4, 84), wobei das Aussteifungselement oder die Aussteifungselemente (8, 38, 42, 56, 60, 66, 74, 82, 96, 98) vor dem Einbringen des plastifizierten Kunststoffs in das Formwerkzeug (46) an dem Formwerkzeug (46) angeordnet ist oder sind, derart, dass das mindestens eine Aussteifungselement (8, 38, 42, 56, 60, 66, 74, 82, 96, 98) mit einer dem Vorratsvolumen (6) abgewandten Außenseite (10) mit der Kunststoffwandung (4, 84) verbunden ist,
**dadurch gekennzeichnet, dass**
- die normal zur Kunststoffwandung gemessene, maximale Dicke des mindestens einen Aussteifungselements (8, 38, 42, 56, 60, 66, 74, 82, 96, 98) einem Vielfachen der Wanddicke der Kunststoffwandung (4, 84) entspricht.

12. Verfahren nach Anspruch 11,
**dadurch gekennzeichnet, dass**
- das Formwerkzeug (46) eine Blasform ist und mindestens ein Aussteifungselement (8, 38, 42, 56, 60, 66, 74, 82, 96, 98) durch Überblasen desselben innerhalb der Blasform stoffschlüssig und/oder formschlüssig mit der Kunststoffwandung (4, 84) verbunden wird.

13. Verfahren nach einem der Ansprüche 11 oder 12,
**dadurch gekennzeichnet, dass**
- mindestens ein Aussteifungselement (8, 38, 42, 56, 60, 66, 74, 82, 96, 98) auf an einer Stirnseite und/oder an die Stirnseite angrenzenden Seitenflanke (31) eine Mehrzahl von Schweißstegen oder Schweißpins (34, 86, 88) hat, um beim Einbringen des plastifizierten Kunststoffs in das Formwerkzeug (46) eine stoffschlüssige Verbindung (70, 78, 80, 92) zur Kunststoffwandung (4, 84) auszubilden, wobei die Schweißstege insbesondere rasterartig verteilt oder die Schweißpins (34, 86, 88) punktförmig in Zeilen und Spalten an einem Verbindungsbereich (30) vorgesehen sind;
und/oder
- mindestens ein Aussteifungselement (8, 38, 42, 56, 60, 66, 74, 82, 96, 98) eine Nut (36), eine Hinterschneidung oder einen Vorsprung hat, um beim Einbringen des plastifizierten Kunststoffs in das Formwerkzeug (46) eine formschlüssige Verbindung (68, 94) zur Kunststoffwandung (4, 84) auszubilden.

14. Verfahren nach einem der Ansprüche 11 bis 13,
**dadurch gekennzeichnet, dass**
- mindestens ein Aussteifungselement (8, 38, 42, 56, 60, 66, 74, 82, 96, 98) dreiseitig mit der Kunststoffwandung (4, 84) verbunden wird,
- wobei insbesondere eine Stirnseite und zwei an die Stirnseite angrenzende, einander abgewandte Seitenflanken (31) stoffschlüssig mit der Kunststoffwandung (4, 84) verbunden werden,
- wobei das Aussteifungselement (8, 38, 42, 56, 60, 66, 74, 82, 96, 98) vor dem Einbringen des plastifizierten Kunststoffs auf einem Dorn oder Steg des Formwerkzeugs (46) sitzt, der in das Aussteifungselement (8, 38, 42, 56, 60, 66, 74, 82, 96, 98) ragt und von den Seitenflanken (31) zweiseitig eingefasst und zumindest abschnittsweise gegenüber einem Formhohlraum (52) des Formwerkzeugs (46) abgegrenzt ist.

15. Verfahren nach einem der Ansprüche 11 bis 14,
**dadurch gekennzeichnet, dass**
- mindestens ein Aussteifungselement (8, 38, 42, 56, 60, 66, 74, 82, 96, 98) dreiseitig mit der Kunststoffwandung (4, 84) verbunden wird,
- wobei insbesondere eine Stirnseite und zwei an die Stirnseite angrenzende, einander abgewandte Seitenflanken (31) stoffschlüssig mit der Kunststoffwandung (4, 84) verbunden werden,
- wobei das Aussteifungselement (8, 38, 42, 56, 60, 66, 74, 82, 96, 98) vor dem Einbringen des plastifizierten Kunststoffs zwischen zwei Formeinsätzen aufgenommen ist und wobei die Formeinsätze das Aussteifungselement (8, 38, 42, 56, 60, 66, 74, 82, 96, 98) zumindest abschnittsweise gegenüber einem Formhohlraum (52) des Formwerkzeugs (46) abgrenzen.

16. Verfahren nach einem der Ansprüche 11 bis 14,
**dadurch gekennzeichnet, dass**
das Aussteifungselement (8, 38, 42, 56, 60, 66, 74, 82, 96, 98) beim Einbringen in das Formwerkzeug (46) mit einem Verrastungselement (110) an dem Formwerkzeug (46) fixiert wird.

17. Aussteifungselement (8, 38, 42, 56, 60, 66, 74, 82, 96, 98) für einen Kraftstoffbehälter (2), insbesondere für einen Kraftstoffbehälter (2) nach einem der Ansprüche 1 bis 10,
**dadurch gekennzeichnet, dass**
das Aussteifungselement (8, 38, 42, 56, 60, 66, 74, 82, 96, 98) zumindest ein Sackloch (116) aufweist, welches zum Greifen mit einem Greifer eingerichtet ist.

## Claims

1. Fuel tank (2) for a motor vehicle,
- comprising a plastics wall (4, 84) which delimits a storage volume (6) for storing a fuel,
- comprising one or more reinforcing elements (8, 38, 42, 56, 60, 66, 74, 82, 96, 98) for reinforcing the plastics wall (4, 84),
- at least one reinforcing element (8, 38, 42, 56, 60, 66, 74, 82, 96, 98) being connected to an outer side (10) of the plastics wall (4, 84) that faces away from the storage volume (6),
- a maximum thickness (D1) of at least one reinforcing element (8, 38, 42, 56, 60, 66, 74, 82, 96, 98) measured normal to the plastics wall (4, 84) being greater than the wall thickness (D2) of the plastics wall (4, 84),
**characterized in that** the at least one reinforcing element (8, 38, 42, 56, 60, 66, 74, 82, 96, 98) is tapered on two sides starting from a region of maximum thickness and the
- at least one reinforcing element (8, 38, 42, 56, 60, 66, 74, 82, 96, 98) is arranged in a transition (24) from a side wall (16) to a tank top (20) and/or the at least one reinforcing element (8, 38, 42, 56, 60, 66, 74, 82, 96, 98) is arranged in a transition (26) from a side wall (16) to a tank bottom (22).

2. Fuel tank (2) according to claim 1, **characterized in that**
- the plastics wall (4, 84) has a first half-shell (12, 14) and a second half-shell (12, 14) which are circumferentially welded to one another in the region of the side wall (16),
- the first half-shell (12, 14) being an upper shell which comprises the tank top (20) and
- the second half-shell (12, 14) being a lower shell which comprises the tank bottom (22).

3. Fuel tank (2) according to either claim 1 or claim 2, **characterized in that**
- at least one reinforcing element (8, 38, 42, 56, 60, 66, 74, 82, 96, 98) has a substantially triangular or crescent-shaped basic shape.

4. Fuel tank (2) according to any of claims 1 to 3, **characterized in that**
- the reinforcing element (8, 38, 42, 56, 60, 66, 74, 82, 96, 98) has at least one tapered end portion (44) which in particular has a thickness of 5 mm or less over an end portion length of 20 mm or less and is in particular tapered in a wedge shape.

5. Fuel tank (2) according to any of claims 1 to 4, **characterized in that**
- an end connection region (30) of at least one reinforcing element (8, 38, 42, 56, 60, 66, 74, 82, 96, 98) is at least partially or completely arch-shaped, the reinforcing element (8, 38, 42, 56, 60, 66, 74, 82, 96, 98) being connected to the plastics wall (4, 84) in the connection region (30) in particular in an integrally bonded manner.

6. Fuel tank (2) according to any of claims 1 to 5, **characterized in that**
- at least one reinforcing element (8, 38, 42, 56, 60, 66, 74, 82, 96, 98) is an injection-molded component with ribbing (32) and/or
- at least one reinforcing element (8, 38, 42, 56, 60, 66, 74, 82, 96, 98) has a plurality of welding pins (34, 86, 88) which are arranged in particular on an end face and/or on a side surface of the reinforcing element (8, 38, 42, 56, 60, 66, 74, 82, 96, 98) that adjoins the end face.

7. Fuel tank (2) according to any of claims 1 to 6, **characterized in that**
- at least one reinforcing element (8, 38, 42, 56, 60, 66, 74, 82, 96, 98) is connected on three sides to the plastics wall (4, 84),
- in particular an end face and two side flanks (31) which adjoin the end face and face away from one another being integrally bonded to the plastics wall (4, 84).

8. Fuel tank (2) according to any of claims 1 to 7, **characterized in that**
- at least one form-fitting connection (68, 94) is formed between at least one reinforcing element (8, 38, 42, 56, 60, 66, 74, 82, 96, 98) and the plastics wall (4, 84), in particular by an undercut, a groove (36) or the like.

9. Fuel tank (2) according to any of claims 1 to 8, **characterized in that**
- at least one reinforcing element (8, 38, 42, 56, 60, 66, 74, 82, 96, 98) comprises HDPE or consists of HDPE.

10. Fuel tank (2) according to any of claims 1 to 9, **characterized in that**
- at least one reinforcing element (8, 38, 42, 56, 60, 66, 74, 82, 96, 98) is embedded in a recess or depression (40) in the plastics wall (4, 84) and/or
- a height of the fuel tank (2) measured between a tank top (20) and a tank bottom (22) of the fuel tank (2) is 30 cm or more and/or
- a plurality of reinforcing elements (8, 38, 42, 56, 60, 66, 74, 82, 96, 98) are provided on the plastics wall (4, 84).

11. Method for producing a fuel tank (2) according to any of claims 1 to 10, comprising the following method steps:
- producing the plastics wall (4, 84) which delimits a storage volume (6) for storing fuel, by introducing a plasticized plastics material into a molding tool (46);
- connecting the one or more reinforcing elements for reinforcing the plastics wall (4, 84) to the plastics wall (4, 84), the reinforcing element or the reinforcing elements (8, 38, 42, 56, 60, 66, 74, 82, 96, 98) being arranged on the molding tool (46) before the plasticized plastics material is introduced into the molding tool (46), such that at least one reinforcing element (8, 38, 42, 56, 60, 66, 74, 82, 96, 98) is connected to an outer side (10) of the plastics wall (4, 84) that faces away from the storage volume (6), **characterized in that**
- the maximum thickness of the at least one reinforcing element (8, 38, 42, 56, 60, 66, 74, 82, 96, 98) measured normal to the wall corresponds to a multiple of the wall thickness of the plastics wall (4, 84).

12. Method according to claim 11,
**characterized in that**
- the molding tool (46) is a blow mold and at least one reinforcing element (8, 38, 42, 56, 60, 66, 74, 82, 96, 98) is connected to the plastics wall (4, 84) in an integrally bonded and/or form-fitting manner by blowing over said element within the blow mold.

13. Method according to either claim 11 or claim 12,
**characterized in that**
- at least one reinforcing element (8, 38, 42, 56, 60, 66, 74, 82, 96, 98) has, on an end face or on a side flank (31) which adjoins the end face, a plurality of welding ridges or welding pins (34, 86, 88) in order to form an integral bond (70, 78, 80, 92) to the plastics wall (4, 84) when the plasticized plastics material is introduced into the molding tool (46), the welding ridges being distributed in particular in a grid-like manner or the welding pins (34, 86, 88) being provided in a punctiform manner in rows and columns at a connection region (30); and/or
- at least one reinforcing element (8, 38, 42, 56, 60, 66, 74, 82, 96, 98) has a groove (36), an undercut or a projection in order to provide a form-fitting connection (68, 94) to the plastics wall (4, 84) when the plasticized plastics material is introduced into the molding tool (46).

14. Method according to any of claims 11 to 13,
**characterized in that**
- at least one reinforcing element (8, 38, 42, 56, 60, 66, 74, 82, 96, 98) is connected to the plastics wall (4, 84) on three sides,
- in particular an end face and two side flanks (31) which adjoin the end face and face away from one another being integrally bonded to the plastics wall (4, 84),
- the reinforcing element (8, 38, 42, 56, 60, 66, 74, 82, 96, 98), before the plasticized plastics material is introduced, being seated on a mandrel or ridge of the molding tool (46), which mandrel or ridge protrudes into the reinforcing element (8, 38, 42, 56, 60, 66, 74, 82, 96, 98) and is bordered on two sides by the side flanks (31) and is at least partially delimited from a mold cavity (52) of the mold (46).

15. Method according to any of claims 11 to 14,
**characterized in that**
- at least one reinforcing element (8, 38, 42, 56, 60, 66, 74, 82, 96, 98) is connected to the plastics wall (4, 84) on three sides,
- in particular an end face and two side flanks (31) which adjoin the end face and face away from one another being integrally bonded to the plastics wall (4, 84),
- the reinforcing element (8, 38, 42, 56, 60, 66, 74, 82, 96, 98), before the plasticized plastics material is introduced, being received between two mold inserts and the mold inserts at least partially delimiting the reinforcing element (8, 38, 42, 56, 60, 66, 74, 82, 96, 98) from a mold cavity (52) of the molding tool (46).

16. Method according to any of claims 11 to 14,
**characterized in that**
the reinforcing element (8, 38, 42, 56, 60, 66, 74, 82, 96, 98) is secured to the molding tool (46) by means of a latching element (110) during the introduction into the molding tool (46).

17. Reinforcing element (8, 38, 42, 56, 60, 66, 74, 82, 96, 98) for a fuel tank (2), in particular for a fuel tank (2) according to any of claims 1 to 10,
**characterized in that**
the reinforcing element (8, 38, 42, 56, 60, 66, 74, 82, 96, 98) has at least one blind hole (116) which is designed for being gripped by a gripper.

## Revendications

1. Réservoir de carburant (2) pour un véhicule automobile,
- comportant une paroi (4, 84) en matière plastique, laquelle délimite un volume de stockage (6) pour approvisionner en carburant,
- comportant au moins un élément de renforcement (8, 38, 42, 56, 60, 66, 74, 82, 96, 98) pour renforcer la paroi (4, 84) en matière plastique,
- dans lequel l'au moins un élément de renforcement (8, 38, 42, 56, 60, 66, 74, 82, 96, 98) est relié à une paroi extérieure (10) du volume de stockage (6) opposée à la paroi (4, 84) en matière plastique,
- dans lequel une épaisseur maximale (D1), mesurée perpendiculairement à la paroi (4, 84) en matière plastique, dudit l'au moins un élément de renforcement (8, 38, 42, 56, 60, 66, 74, 82, 96, 98) est supérieure à l'épaisseur de paroi (D2) de la paroi (4, 84) en matière plastique, **caractérisé en ce que**
- ledit au moins un élément de renforcement (8, 38, 42, 56, 60, 66, 74, 82, 96, 98) se rétrécit des deux côtés à partir d'une zone d'épaisseur maximale et que ledit au moins un élément de renforcement (8, 38, 42, 56, 60, 66, 74, 82, 96, 98) est disposé à une jonction (24) entre une paroi latérale (16) et un recouvrement de réservoir (20) et/ou que ledit au moins un élément de renforcement (8, 38, 42, 56, 60, 66, 74, 82, 96, 98) est disposé à une jonction (26) entre une paroi latérale (16) et un fond de réservoir (22).

2. Réservoir de carburant (2) selon la revendication 1, **caractérisé en ce que**
- la paroi (4, 84) en matière plastique comporte une première demi-coque (12, 14) et une seconde demi-coque (12, 14), lesquelles sont soudées circonférentiellement dans la zone de la paroi latérale (16),
- la première demi-coque (12, 14) est une coque supérieure comprenant le recouvrement de réservoir (20) et
- la seconde demi-coque (12, 14) est une coque inférieure comprenant le fond de réservoir (22).

3. Réservoir de carburant (2) selon l'une des revendications 1 ou 2, **caractérisé en ce que**
- l'au moins un élément de renforcement (8, 38, 42, 56, 60, 66, 74, 82, 96, 98) présente une forme de base essentiellement triangulaire ou en forme de faucille.

4. Réservoir de carburant (2) selon l'une quelconque des revendications 1 à 3, **caractérisé en ce que**
- l'élément de renforcement (8, 38, 42, 56, 60, 66, 74, 82, 96, 98) comporte au moins une section d'extrémité rétrécie (44), laquelle présente, en particulier une épaisseur de 5 mm ou moins sur une section d'extrémité d'une longueur de 20 mm ou inférieure et laquelle se rétrécit, en particulier en forme de coin.

5. Réservoir de carburant (2) selon l'une quelconque des revendications 1 à 4, **caractérisé en ce que**
- une zone de liaison (30) sur le côté frontal d'au moins un élément de renforcement (8, 38, 42, 56, 60, 66, 74, 82, 96, 98) est incurvée au moins par sections ou complètement, dans lequel l'élément de renforcement (8, 38, 42, 56, 60, 66, 74, 82, 96, 98) est relié, dans la zone de liaison (30), en particulier par liaison de complémentarité de matière, à la paroi (4, 84) en matière plastique.

6. Réservoir de carburant (2) selon l'une quelconque des revendications 1 à 5, **caractérisé en ce que**
- l'au moins un élément de renforcement (8, 38, 42, 56, 60, 66, 74, 82, 96, 98) est un composant moulé par injection comportant un nervurage (32) et/ou
- l'au moins un élément de renforcement (8, 38, 42, 56, 60, 66, 74, 82, 96, 98) comporte une pluralité de broches de soudure (34, 86, 88), lesquelles se trouvent, en particulier sur un côté frontal et/ou sur une surface latérale de l'élément de renforcement (8, 38, 42, 56, 60, 66, 74, 82, 96, 98) adjacente au côté frontal.

7. Réservoir de carburant (2) selon l'une quelconque des revendications 1 à 6, **caractérisé en ce que**
- l'au moins un élément de renforcement (8, 38, 42, 56, 60, 66, 74, 82, 96, 98) est relié sur trois côtés à la paroi (4, 84) en matière plastique,
- dans lequel, en particulier un côté frontal et deux flancs latéraux (31) adjacents au côté frontal et opposés l'un à l'autre sont reliés par liaison de complémentarité de matière à la paroi (4, 84) en matière plastique.

8. Réservoir de carburant (2) selon l'une quelconque des revendications 1 à 7, **caractérisé en ce que**
- entre l'au moins un élément de renforcement (8, 38, 42, 56, 60, 66, 74, 82, 96, 98) et la paroi (4, 84) en matière plastique, au moins une liaison (68, 94) par complémentarité de forme est formée, en particulier au moyen d'une contre-dépouille, une rainure (36) ou analogue.

9. Réservoir de carburant (2) selon l'une quelconque des revendications 1 à 8, **caractérisé en ce que**
- l'au moins un élément de renforcement (8, 38, 42, 56, 60, 66, 74, 82, 96, 98) comporte un HDPE ou est constitué d'un HDPE.

10. Réservoir de carburant (2) selon l'une quelconque des revendications 1 à 9, **caractérisé en ce que**
- l'au moins un élément de renforcement (8, 38, 42, 56, 60, 66, 74, 82, 96, 98) est intégré à un évidement ou à un enfoncement (40) de la paroi (4, 84) en matière plastique et/ou
- une hauteur du réservoir de carburant (2) mesurée entre un recouvrement de réservoir (20) et un fond de réservoir (22) du réservoir de carburant (2) est de 30 cm ou supérieure et/ou
- la pluralité d'éléments de renforcement (8, 38, 42, 56, 60, 66, 74, 82, 96, 98) sont fournis sur la paroi (4, 84) en matière plastique.

11. Procédé de fabrication d'un réservoir de carburant (2) selon l'une quelconque des revendications 1 à 10, comportant les étapes suivantes :
- La fabrication de la paroi (4, 84) en matière plastique, laquelle délimite un volume de stockage (6) pour approvisionner en carburant, au moyen de l'introduction d'une matière en plastique plastifiée dans un outil de formage (46) ;
- la liaison d'au moins un élément de renforcement et de la paroi (4, 84) en matière plastique pour renforcer la paroi (4, 84) en matière plastique, dans lequel l'au moins un élément de renforcement (8, 38, 42, 56, 60, 66, 74, 82, 96, 98), avant l'introduction de la matière en plastique plastifiée dans l'outil de formage (46), est disposés dans l'outil de formage (46) de telle sorte que ledit au moins un élément de renforcement (8, 38, 42, 56, 60, 66, 74, 82, 96, 98) est relié à la paroi (4, 84) en matière plastique par une paroi extérieure (10) opposée au volume de stockage (6), **caractérisé en ce que**
- l'épaisseur maximale dudit au moins un élément de renforcement (8, 38, 42, 56, 60, 66, 74, 82, 96, 98), mesurée perpendiculairement à la paroi en matière plastique, correspond à un multiple de l'épaisseur de paroi de la paroi (4, 84) en matière plastique.

12. Procédé selon la revendication 11,
**caractérisé en ce que**
- l'outil de formage (46) est un moule de soufflage et l'au moins un élément de renforcement (8, 38, 42, 56, 60, 66, 74, 82, 96, 98) est relié par liaison de complémentarité de matière et/ou liaison de complémentarité de forme à la paroi (4, 84) en matière plastique par sursoufflage de celui-ci à l'intérieur du moule de soufflage.

13. Procédé selon l'une des revendications 11 ou 12,
**caractérisé en ce que**
- l'au moins un élément de renforcement (8, 38, 42, 56, 60, 66, 74, 82, 96, 98) comporte, sur un côté frontal et/ou sur le flanc latéral (31) adjacent au côté frontal, une pluralité d'arêtes de soudure ou de broches de soudure (34, 86, 88) pour former une liaison par liaison de complémentarité de matière (70, 78, 80, 92) avec la paroi (4, 84) en matière plastique lors de l'introduction de la matière en plastique plastifiée dans l'outil de formage (46), dans lequel les arêtes de soudure sont en particulier réparties en forme de trame ou les broches de soudure (34, 86, 88) sont fournies sous forme de points en rangées et colonnes au niveau d'une zone de liaison (30) ; et/ou
- l'au moins un élément de renforcement (8, 38, 42, 56, 60, 66, 74, 82, 96, 98) comporte une rainure (36), une contre-dépouille ou une saillie pour former une liaison par liaison de complémentarité de forme (68, 94) avec la paroi (4, 84) en matière plastique lors de l'introduction de la matière en plastique plastifiée dans l'outil de formage (46).

14. Procédé selon l'une quelconque des revendications 11 à 13,
**caractérisé en ce que**
- l'au moins un élément de renforcement (8, 38, 42, 56, 60, 66, 74, 82, 96, 98) est relié à la paroi (4, 84) en matière plastique sur trois côtés,
- dans lequel, en particulier un côté frontal et deux flancs latéraux (31) adjacents au côté frontal et opposés l'un à l'autre sont reliés à la paroi (4, 84) en matière plastique par liaison de complémentarité de forme,
- l'élément de renforcement (8, 38, 42, 56, 60, 66, 74, 82, 96, 98), avant l'introduction de la matière en plastique plastifiée, repose sur un mandrin ou une entretoise de l'outil de formage (46), lequel fait saillie dans l'élément de renforcement (8, 38, 42, 56, 60, 66, 74, 82, 96, 98), est enchâssé sur deux côtés par les flancs latéraux (31) et est délimité au moins par sections par rapport à une cavité de moule (52) de l'outil de formage (46).

15. Procédé selon l'une quelconque des revendications 11 à 14,
**caractérisé en ce que**
- l'au moins un élément de renforcement (8, 38, 42, 56, 60, 66, 74, 82, 96, 98) est relié à la paroi (4, 84) en matière plastique sur trois côtés,
- dans lequel, en particulier un côté frontal et deux flancs latéraux (31) adjacents au côté frontal et opposés l'un à l'autre sont reliés à la paroi (4, 84) en matière plastique par liaison de complémentarité de forme,
- l'élément de renforcement (8, 38, 42, 56, 60, 66, 74, 82, 96, 98) est logé entre deux inserts de moule avant l'introduction de la matière en plastique plastifiée, dans lequel les inserts de moule séparent l'élément de renforcement (8, 38, 42, 56, 60, 66, 74, 82, 96, 98) au moins par sections par rapport à une cavité de moule (52) de l'outil de formage (46).

16. Procédé selon l'une quelconque des revendications 11 à 14,
**caractérisé en ce que**
l'élément de renforcement (8, 38, 42, 56, 60, 66, 74, 82, 96, 98) est fixé à l'outil de formage (46) à l'aide d'un élément d'encliquetage (110) lorsqu'il est introduit dans l'outil de formage (46).

17. Élément de renforcement (8, 38, 42, 56, 60, 66, 74, 82, 96, 98) pour un réservoir de carburant (2), en particulier pour un réservoir de carburant (2) selon l'une quelconque des revendications 1 à 10,
**caractérisé en ce que**
l'élément de renforcement (8, 38, 42, 56, 60, 66, 74, 82, 96, 98) comporte au moins un trou borgne (116), lequel est conçu pour être appréhendé à l'aide d'un préhenseur.
